# EUROPEAN PATENT SPECIFICATION

(11) **EP 1 170 695 B1**
(45) Date of publication and mention of the grant of the patent: **03.12.2008**
(21) Application number: 00114012.8
(22) Date of filing: 04.07.2000
(51) Int. Cl.: G06K 19/07, G06K 19/077

(54) **Trimming circuit for trimming of film type antennas**
Abgleichschaltung zur Abgleichung von folienförmigen Antennen
Circuit d'ajustage pour ajuster des antennes de type film

(43) Date of publication of application: 09.01.2002
(73) Proprietor: TEXAS INSTRUMENTS DEUTSCHLAND GMBH, 85356 Freising (DE)
(72) Inventor: Eberth, Gerhard, 84174 Eching (DE); Brenninger, Heiner, 85402 Kranzberg (DE); Lichtenegger, Alfons, 85356 Freising (DE); Baumann, Adolf, 94579 Zenting (DE); Hoffmann, Johann, 84032 Altdorf (DE); Ecker, Christian, 84048 Mainburg (DE); Ramin, Wolfgang, 85356 Freising (DE); Aslanidis, Konstantin, 85221 Dachau (DE)
(74) Representative: Degwert, Hartmut

(56) References cited:
- EP-A- 0 851 599
- EP-A- 0 918 308
- EP-A- 0 992 366
- WO-A-00/21031
- DE-C1- 19 758 057

## Description

### FIELD OF THE INVENTION

This invention relates to RF-ID antennas in general and antennas printed on film or film layers with a printed antenna in specific.

### BACKGROUND OF THE INVENTION

The manufacture of the lowest cost, highest performance version of an RF-ID system such that tags(transponders) could be disposable but also readable at approximately a meter distance, is oftentimes accomplished through the use of a capacitance circuit and antenna printed on a film, with a transponder IC mounted on top of the film, or just the antenna printed on the film, with a transponder IC mounted on the film, wherein the Transponder IC incorporates the capacitance of the resonant circuit. The Q of an antenna printed on film is dependent upon the number of tums(in addition to other factors), but what also is controlled by the number of turns is the effective inductance. In turn, the effective inductance, coupled with the capacitance of the resonant circuit, determines the resonant frequency.

The read range of the interrogator is dependent, in part, on the Q of the resonant circuit, because the higher the Q, the higher the read range. Another factor in determining read range is the sameness of the transponder response resonance frequency to the reader exciter frequency. In order to achieve the best possible reading/programming range the tag resonance frequency should be adjusted as close to the reader exciter frequency as possible. If the transponder resonant structure is comprised of inductor windings and capacitor blocks printed on some medium, i.e. film or foil, line width tolerances are not within the inductive and capacitive tolerances allowed. Therefore, some tuning of the transponder is necessary. Tuning in the most efficient and proficient way is the challenge.

DE 197 58 057 discloses a contactless IC card having a metal foil provided on a plastic substrate. The foil carries the chip and forms an antenna of a resonant circuit. Laser trimming is used for tuning the resonant circuit.

EP 0 992 366 discloses a card mounted with a circuit chip and circuit chip module. Oppositely arranged bumps are electrically connected by connecting two IC chips through an unisotropic conductor to form an IC chip module. With the IC chip module having such a structure, two IC chips are provided with functions of a processing portion and an antenna and are simply stacked to provide a function for communication and arrangement of interconnection outside the IC chip. This avoids accidental breakage of the interconnection and facilitates a simple assembly. The IC chip module may comprise a resonance circuit comprising five capacitors, five laser taps and a coil L. The laser taps can be disconnected by laser in order to tune the resonance circuit. In another resonance circuit, the inductance rather than the capacitance can be trimmed.

### SUMMARY OF THE INVENTION

The present invention provides a method of tuning the resonance frequency of a transponder to a target frequency according to claim 1.

### BRIEF DESCRIPTION OF THE DRAWINGS

Figure 1 shows a transponder consisting of a parallel resonance circuit with antenna L, resonance capacitor C on the film and the Transponder Integrated Circuit(IC) with the input capacitor CI.
Figure 2 shows a transponder consisting of a parallel resonance circuit with an antenna L on the film, and the resonance capacitor C integrated into the IC.
Figure 3a shows the schematic of the transponder resonant circuit and a procedure of trimming the inductor on film and capacitor on film, which is not an embodiment but is useful for understanding the invention.
Figure 3b shows the schematic of the transponder resonance circuit and a procedure of trimming the capacitor on film, which is not an embodiment but is useful for understanding the invention.
Figure 4 shows the flow chart diagram of the tuning procedure for tuning when the resonance capacitor is on film, which is not an embodiment but is useful for understanding the invention.
Figure 5 shows that when the pass/fail wafer map is created at chip pick and place(probe), the integrated resonance capacitor is measured and the capacitance value is filed along with the pass/fail data on the wafer map.
Figure 6 shows a flow chart of the tag tuning method based on wafer map and integrated resonance capacitor value retrieved from file.

### DETAILED DESCRIPTION OF THE PREFERRED EMBODIMENTS

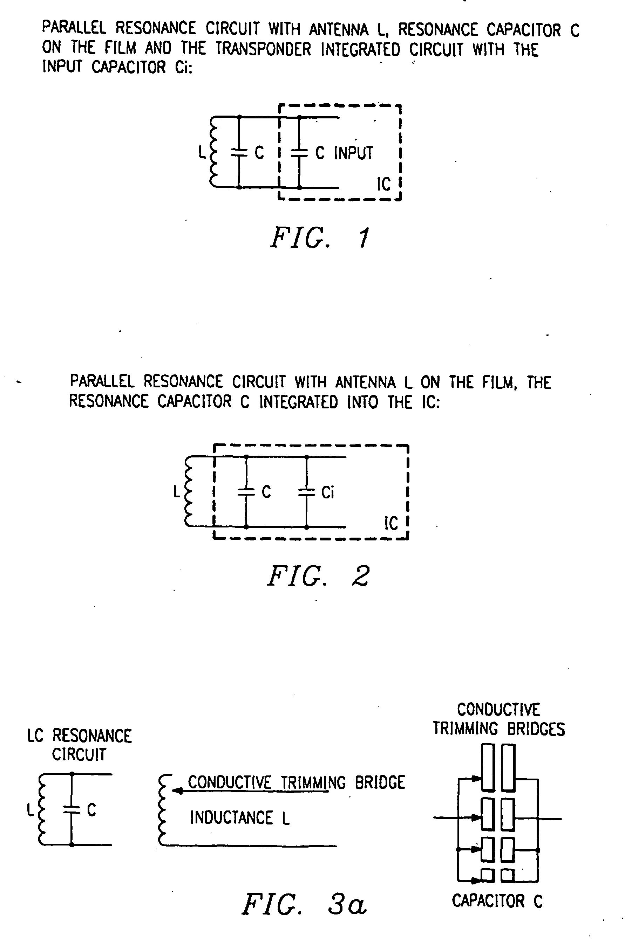

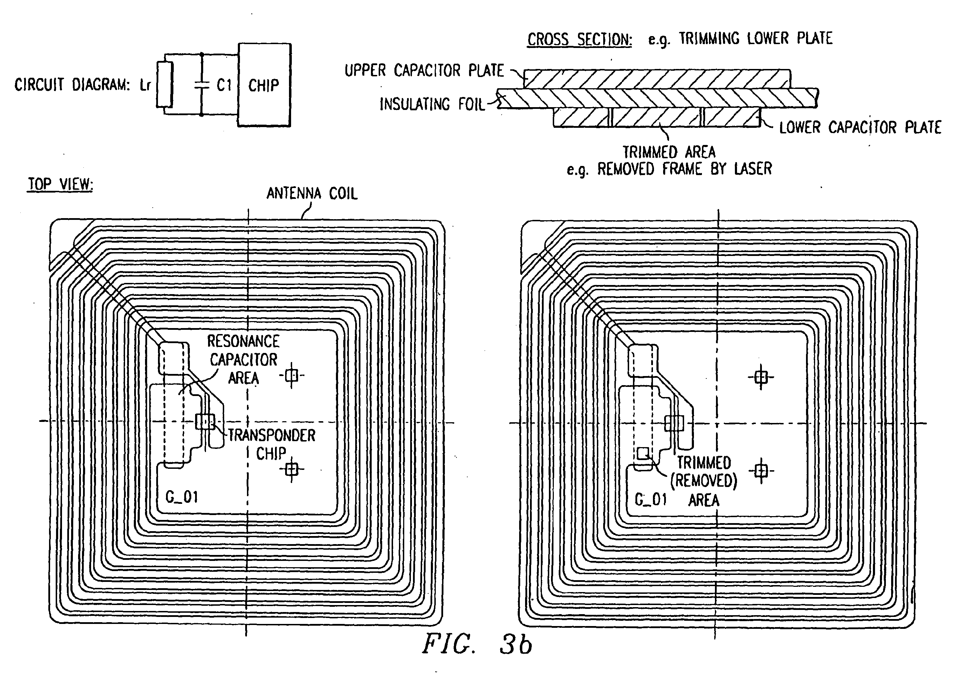

The tag may consist of, for example, a parallel resonance circuit with antenna L, resonance capacitor C on the film and the Transponder Integrated Circuit(IC) with the input capacitor Ci as is shown in Figure 1 or as shown in Figure 2, a parallel resonance circuit with an antenna L on the film, and the resonance capacitor C integrated into the IC. The capacitor on the film may also be formed by two conductive plates on two opposite sides of the film, the latter acting as the dielectric of the capacitor as shown in Figure 3b. Depending upon the resonance capacitor option, on film or integrated into the chip, different resonance frequency trimming options can be applied.

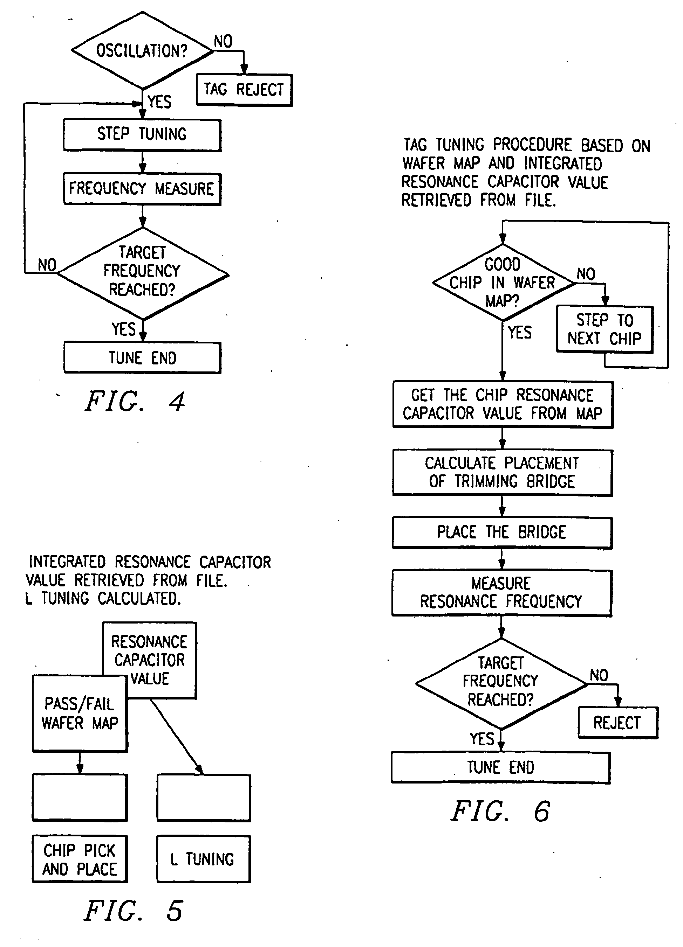

According to an embodiment of the invention, a method of tuning a transponder having the resonance capacitor integrated into the IC begins with measuring the integrated resonance capacitor at chip probe testing. The capacitor value is filed together with a chip Pass/Fail Wafer Map wherein the chip Pass/Fail Wafer Map defining the x-y position of a chip on a wafer. After chip mount onto the film the capacitor value is retrieved from the file, the inductance trimming portion is pre-calculated to achieve the desired resonance frequency and trimming to the target frequency is performed. A flow chart showing the steps in the flow is shown in Figure 6. As a precursor to Figure 6, Figure 5 shows that when the pass/fail wafer map is created at chip pick and place(probe), the integrated resonance capacitor is measured and the capacitance value is filed along with the pass/fail data on the wafer map. Subsequently, according to the flow chart shown in Figure 6, the chip is checked for goodness and stepped over if found to not be good. If the chip is found to be good, the associated capacitance value is retrieved from the file and, knowing the desired resonance frequency, the inductance tuning is calculated or the placement of the trimming bridge is calculated. The bridge is then placed, the resonant frequency of the tag is measured and compared against the target frequency. If the target frequency is met, the tuning is complete, otherwise, the tag is rejected.

An alternative trimming method to the flow shown in Figure 6 is that upon discovering a 'good' chip, the resonance capacitor value is stored in the IC non-volatile memory and the chip is mounted to the film comprising an inductor. The tag is then activated to read the capacitor value, and the inductor tuning(bridge placement) is calculated from the resonance capacitor value. The bridge is placed, the resonance frequency measured and then a comparison is done between the measured resonance frequency and the target frequency. If the target frequency is reached, the tuning is complete. If the target frequency is not reached, the entire tag is rejected.

## Claims

1. A method of tuning the resonance frequency of a transponder to a target frequency, wherein said transponder comprises a film antenna with an IC mounted on said film antenna and wherein integrated resonance capacitor is part of said IC, the method comprising the steps of:
testing and measuring said IC at chip probe testing to determine the pass/fail of the IC and to measure the capacitance value of said integrated resonance capacitor;
storing said integrated resonance capacitance value;
mounting said pass IC on a film antenna with variable inductance;
retrieving said integrated resonance capacitance value and calculating the amount of inductance necessary to achieve the target frequency in dependence upon said resonance capacitance value;
tuning said film antenna to achieve the necessary inductance;
measuring the transponder resonance frequency;
comparing said transponder resonance frequency to said target frequency and rejecting said transponder if said transponder resonance frequency is not said target frequency.

2. The method according to claim 1, wherein said inductance is at a maximum at the start of tuning.

3. The method according to claim 1, wherein said tuning said film antenna comprises the step of reducing the amount of inductance.

4. The method according to claim 1, wherein testing and measuring said IC comprises creating a wafer map.

5. The method according to claim 4, wherein the integrated resonance capacitance value is stored with the pass/fail data of the wafer map.

6. The method according to claim 1, wherein the integrated resonance capacitance value is stored into a non-volatile memory of said IC.

7. The method according to claim 6, wherein the step of retrieving comprises activating said transponder to receive the resonance capacitance value.

## Patentansprüche

1. Verfahren zum Abstimmen der Resonanzfrequenz eines Transponders auf eine Sollfrequenz, wobei der Transponder eine Folienantenne mit einem auf der Folienantenne montierten integrierten Schaltkreis (IC) umfasst, wobei ein integrierter Resonanzkondensator einen Teil des IC bildet, wobei das Verfahren die folgenden Schritte umfasst:
Testen und Messen des IC beim Chipsondentest, um zu bestimmen, ob der IC den Test besteht oder nicht, und um den Kapazitätswert des integrierten Resonanzkondensators zu messen;
Speichern des Wertes des integrierten Resonanzkondensators;
Montieren des IC, der den Test bestanden hat, auf einer Folienantenne mit variabler Induktivität;
Auslesen des Wertes des integrierten Resonanzkondensators und Berechnen des Induktivitätswerts, der notwendig ist, um die Sollfrequenz zu erzielen, in Abhängigkeit von dem Wert des Resonanzkondensators;
Abstimmen der Folienantenne, um die notwendige Induktivität zu erzielen;
Messen der Transponder-Resonanzfrequenz;
Vergleichen der Transponder-Resonanzfrequenz mit der Sollfrequenz und Aussondern des Transponders, falls die Transponder-Resonanzfrequenz nicht die Sollfrequenz ist.

2. Verfahren nach Anspruch 1, wobei die Induktivität zu Beginn des Abstimmens maximal ist.

3. Verfahren nach Anspruch 1, wobei das Abstimmen der Folienantenne den Schritt eines Verringerns des Induktivitätsbetrags umfasst.

4. Verfahren nach Anspruch 1, wobei das Testen und Messen des IC ein Erzeugen einer Waferkarte umfasst.

5. Verfahren nach Anspruch 4, wobei der Wert des integrierten Resonanzkondensators zusammen mit Bestanden/Nicht-Bestanden-Daten der Waferkarte gespeichert wird.

6. Verfahren nach Anspruch 1, wobei der Wert des integrierten Resonanzkondensators in einem nichtflüchtigen Speicher des IC gespeichert wird.

7. Verfahren nach Anspruch 6, wobei der Schritt des Auslesens ein Aktivieren des Transponders umfasst, um den Wert des Resonanzkondensators zu empfangen.

## Revendications

1. Procédé d'accord de la fréquence de résonance d'un transpondeur à une fréquence cible, dans lequel ledit transpondeur comprend une antenne film avec un circuit intégré monté sur ladite antenne film et dans lequel un condensateur de résonance intégré fait partie dudit circuit intégré, le procédé comprenant les étapes consistant à :
tester et mesurer ledit circuit intégré lors d'un test de sonde de puce pour déterminer si le circuit intégré est bon ou mauvais et pour mesurer la valeur de capacitance dudit condensateur de résonance intégré ;
mémoriser ladite valeur de capacitance de résonance intégrée ;
monter ledit circuit qui a réussi le test sur une antenne film avec une inductance variable ;
récupérer ladite valeur de capacitance de résonance intégrée et calculer la quantité d'inductance nécessaire pour atteindre la fréquence cible en fonction de ladite valeur de capacitance de résonance ;
accorder ladite antenne film pour atteindre l'inductance nécessaire;
mesurer la fréquence de résonance du transpondeur ;
comparer ladite fréquence de résonance du transpondeur à ladite fréquence cible et rejeter ledit transpondeur si ladite fréquence de résonance du transpondeur n'est pas ladite fréquence cible.

2. Procédé selon la revendication 1, dans lequel ladite inductance est à un maximum au début de l'accord.

3. Procédé selon la revendication 1, dans lequel ledit accord de ladite antenne film comprend l'étape consistant à réduire la quantité d'inductance.

4. Procédé selon la revendication 1, dans lequel le test et la mesure dudit circuit intégré comprennent la création d'une carte de tranche.

5. Procédé selon la revendication 4, dans lequel la valeur de capacitance de résonance intégrée est mémorisée avec les données de réussite/échec de la carte de tranche.

6. Procédé selon la revendication 1, dans lequel la valeur de capacitance de résonance intégrée est mémorisée dans une mémoire non volatile dudit circuit intégré.

7. Procédé selon la revendication 6, dans lequel l'étape de récupération comprend l'activation dudit transpondeur pour recevoir la valeur de capacitance de résonance.
